# EUROPÄISCHE PATENTSCHRIFT

(11) **EP 0 584 468 B1**
(45) Veröffentlichungstag und Bekanntmachung des Hinweises auf die Patenterteilung: **06.12.1995**
(21) Anmeldenummer: 93108821.5
(22) Anmeldetag: 02.06.1993
(51) Int. Cl.: B21F 35/00, B21F 3/04, F16F 1/06

(54) **Verfahren und Vorrichtung zum Herstellen von gekrümmten Schraubenmfedern**
Process and apparatus for manufacturing curved helical springs
Procédé et dispositif de fabrication de ressorts hélicoidaux courbés

(30) Priorität: 29.07.1992 DE 4224962
(43) Veröffentlichungstag der Anmeldung: 02.03.1994
(73) Patentinhaber: Fried. Krupp AG Hoesch-Krupp, 44145 Dortmund (DE)
(72) Erfinder: Vondracek, Hans, D-5805 Breckerfeld (DE)

(56) Entgegenhaltungen:
- WO-A-91/06785
- DE-B- 1 294 909
- DE-C- 420 944
- NL-A- 55 309

## Beschreibung

Die Erfindung betrifft ein Verfahren gemäß dem Oberbegriff des Anspruches 1 sowie eine Vorrichtung zur Durchführung des Verfahrens gemäß dem Oberbegriff des Anspruchs 2.

Im unbelasteten Zustand gekrümmte Schraubenfedern sind z. B. aus der DE-PS 1 505 616 und der DE-PS 3 743 450 bekannt. Schraubenfedern dieser Art werden vorteilhaft in Federbeinen von Fahrzeugachsen eingesetzt, da durch die gezielte Ausrichtung der Krümmung im Federbein unerwünschte Reibkräfte und Biegemomente an der Kolbenstange des Dämpfers weitgehend kompensiert werden können.

Die Fertigung gekrümmter Schraubenfedern erfolgt bisher ausschließlich auf Kaltwindeautomaten ohne Wickeldorn, wie sie z. B. aus dem "Handbuch Federn" von Dr. sc. techn. Manfred Meissner und Dipl.-Ing. Klaus Wanke, VEB Verlag Technik Berlin, 1988, Seiten 60 bis 62, bekannt sind, da bei diesem Formgebungsverfahren die gewünschten Krümmungen ohne Mehraufwand durch alternierende Änderung der Windungssteigungen realisiert werden können.

Im Gegensatz zu dornlosen Windeverfahren erfolgt insbesondere die Warmfertigung von Schraubenfedern auf sog. Wickelbänken, bei denen die Formgebung entweder durch zwei parallele, zylindrische Walzen, als Wickeldorn und Leitrolle bezeichnet, erfolgt oder die Funktion der Leitrolle durch eine CNC-gesteuerte Drahtführung übernommen wird, wie die Veröffentlichungen der Hoesch Hohenlimburg AG "Warmgeformte Federn", Seiten 185 und 186, die anläßlich der 52. IAA in Frankfurt/Main 1987 sowie der Stahlwerke Brüninghaus GmbH "Technische Daten Fahrzeugfedern", Seiten 106 und 107 die anläßlich der 45. IAA in Frankfurt/Main 1973 überreicht wurden, zeigen.

Um mit den vorhandenen Fertigungseinrichtungen gekrümmte Schraubenfedern herstellen zu können, ist ein zweistufiges Verfahren entwickelt worden (interner Stand der Technik).

Zunächst wird eine gerade, zylindrische Schraubenfeder gewikkelt, die in der zweiten Stufe in eine Härtequette mit gekrümmten Biegeleisten übergeben wird. Beim Schließen der Härtequette erhält die gerade Feder vor dem Abtauchen in das Härteöl über die Biegeleiste die gewünschte Bogenform (siehe z.B. WO-A-91 06785).

Als wesentlicher Nachteil dieses zweistufigen Verfahrens sind im Vergleich zur bisherigen Fertigung gerader Federn primär der zusätzliche Aufwand und damit die zusätzlichen Kosten der zweiten Stufe anzusehen.

Ferner ist aus der DE 4 124 326 C1 ein Verfahren zur Herstellung von gekrümmten Schraubenfedern bekannt, wobei die Krümmung der Schraubenfeder durch partielle Kühlung oder Erwärmung von Windungsteilen vor bzw. während des Setzens erreicht werden soll.

Die reproduzierbare Serienfertigung von gekrümmten Schraubendruckfedern nach diesem bekannten Verfahren ist stark abhängig von den lokalen Fließgrenzen, welche direkt durch die Vergütefestigkeit der Feder und die lokalen Federtemperaturen bestimmt werden. Es ist deshalb erforderlich, daß zur Erzielung der gewünschten Krümmung neben der lokal beeinflußten Fließgrenze eine für den jeweiligen Querschnitt oder Windungsabschnitt genau abgestimmte Beanspruchung während des Setzvorgangs aufgebracht werden muß, was bei den heute üblichen Toleranzforderungen nur mit wirtschaftlich nicht vertretbarem Aufwand möglich erscheint.

Von daher liegt der Erfindung die Aufgabe zugrunde, ein Verfahren bzw. eine Vorrichtung der eingangs genannten Art zu schaffen, das bzw. die es erlaubt, im unbelasteten Zusand gekrümmte Schraubenfedern in einem Arbeitsgang unter Berücksichtigung der geforderten Toleranzvorgaben wirtschaftlich und sicher herstellen zu können.

Nach der Erfindung wird die Aufgabe in Verbindung mit den Oberbegriffsmerkmalen durch die in den kennzeichnenden Teilen der Ansprüche 1 bzw. 2 angegebenen Merkmale gelöst.

Im Anspruch 3 ist eine vorteilhafte und zweckmäßige Ausgestaltung der Vorrichtung angegeben.

Die Vorteile des erfindungsgemäßen Verfahrens bzw. der Vorrichtung liegen insbesondere darin, daß im unbelasteten Zustand gekrümmte Schraubenfedern in einem Arbeitsgang wirtschaftlich hergestellt werden können.

Die Erfindung wird im folgenden anhand von in der Zeichnung schematisch dargestellten Ausführungsbeispielen näher erläutert. Es zeigt
- Fig. 1: eine Wickelbank in Vorderansicht,
- Fig. 2: eine andere Ausbildung einer Wickelbank in Vorderansicht,
- Fig. 3: einen Ausschnitt einer Wickelbank in Vorderansicht und im Querschnitt,
- Fig. 4: eine weitere Wickelbank in Vorderansicht.

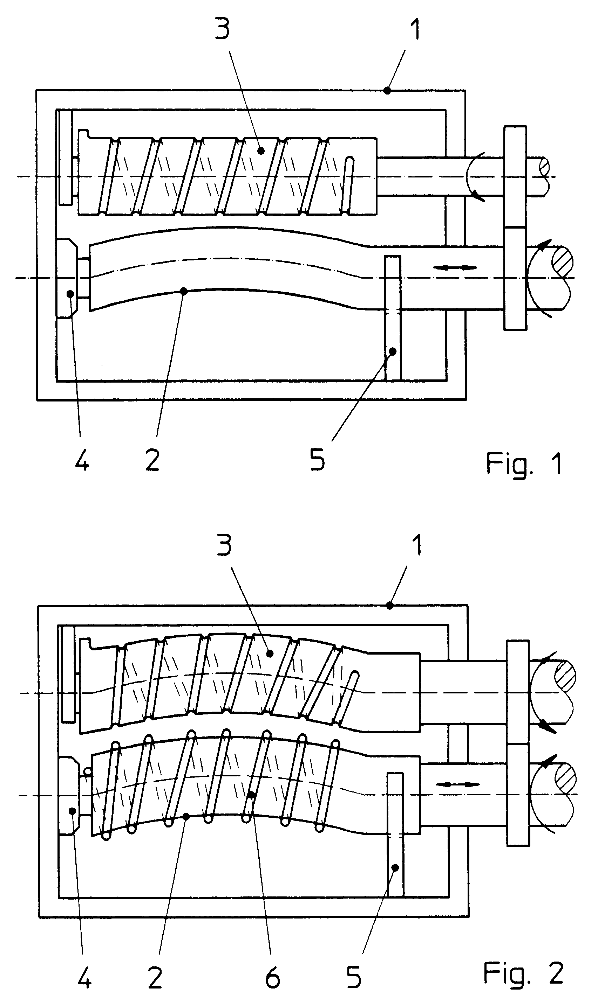

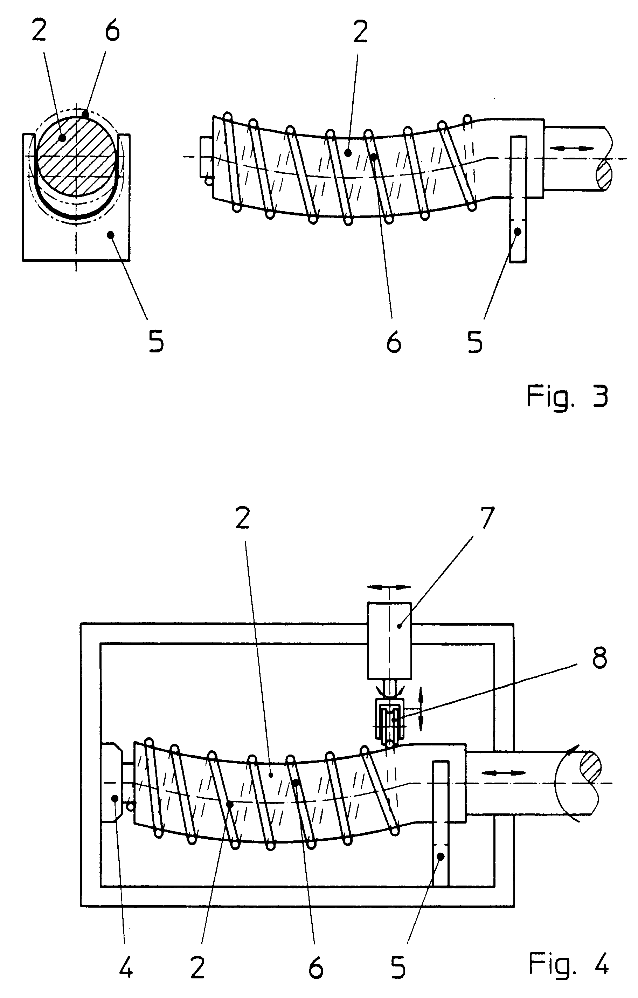

Wie aus den Fig. 1 bis 4 hervorgeht, weist eine Warmwickelbank 1, im wesentlichen bestehend aus Wickeldorn 2, Leitrolle 3 (Fig. 1 und 2) bzw. CNC-gesteuerter Draht- bzw. Stabführung 7 (Fig. 4), Dornschloß 4 und Abstreifer 5, zum Herstellen von im unbelasteten Zustand gekrümmten Schraubenfedern 6 aus auf Wickeltemperatur erwärmten, nicht dargestellten Drahtabschnitten bzw. Stäben zumindest einen Wickeldorn 2 auf, der entsprechend der gewünschten Krümmung der Schraubenfeder 6 gebogen ist.

Nach Fig. 2 ist vorgesehen, daß auch die Leitrolle 3 entsprechend gekrümmt ist.

Damit die Schraubenfeder 6 nach dem Wickeln, wobei sich durch entgegengesetzte Drehung von Wickeldorn 2 und Leitrolle 3 der vom Dornschloß 4 gehaltene, nicht dargestellte Stab formschlüssig auf den Wickeldorn 2 aufwickelt, problemlos vom Wickeldorn 2 mittels des Abstreifers 5 in Krümmungsebene abgezogen werden kann, ist der Abstreifer 5 derart ausgebildet, daß er lediglich die Windungsteile der Schraubenfeder 6 erfaßt, die seitlich parallel zur Krümmungsebene liegen, und in Krümmungsrichtung eine Ausnehmung aufweist, deren Tiefe der Krümmungshöhe angepaßt ist (Fig. 3).

Fig. 4 zeigt die Ausführung einer Wickelbank 1 mit einer CNC-gesteuerten Draht- bzw. Stabführung 7 mit einer schmalen Rolle 8, die beim Wickeln den zur Schraubenfeder 6 zu wickelnden Draht bzw. Stab formschlüssig umgibt und der gekrümmten Kontur des Wickeldorns 2 in Achsrichtung folgt.

## Patentansprüche

1. Verfahren zum Herstellen von im unbelasteten Zustand gekrümmten Schraubenfedern (6) aus auf Wickeltemperatur erwärmten Drahtabschnitten bzw. Stäben, dadurch gekennzeichnet, daß die Schraubenfeder (6) direkt auf einem der gewünschten Krümmung der Schraubenfeder entsprechend gekrümmten Wickeldorn (2) gewickelt wird.

2. Vorrichtung zur Durchführung des Verfahrens nach Anspruch 1, bestehend aus einer Warmwickelbank (1) mit Wickeldorn (2) und Leitrolle (3) bzw. CNC-gesteuerter Draht- bzw. Stabführung (7), dadurch gekennzeichnet, daß der Wickeldorn (2) entsprechend der gewünschten Krümmung der Schraubenfeder (6) gekrümmt ist.

3. Vorrichtung nach Anspruch 2 mit Leitrolle, dadurch gekennzeichnet, daß die Leitrolle (3) ebenfalls entsprechend gekrümmt ist.

## Claims

1. Method for manufacturing helical springs (6) which are curved in the non-loaded state and which are made from lengths of wire or rods which are heated to a winding temperature, characterised in that the helical spring (6) is wound directly on a winding spindle (2) which is curved corresponding to the desired curvature of the helical spring.

2. Device for carrying out the method according to claim 1 consisting of a heated winding bench (1) comprising a winding spindle (2) and a guide roller (3) and a CNC-controlled wire or rod guide (7), characterised in that the winding spindle (2) is curved corresponding to the desired curvature of the helical spring (6).

3. Device according to claim 2 comprising a guide roller, characterised in that the guide roller (3) is likewise correspondingly curved.

## Revendications

1. Procédé de fabrication de ressorts hélicoïdaux (6) cintrés à l'état non contraint, en tronçons de fil ou en barreaux chauffés à température d'enroulement, caractérisé en ce que le ressort hélicoïdal (6) est directement enroulé sur un noyau d'enroulement (2) cintré selon le cintrage désiré pour le ressort hélicoïdal.

2. Dispositif en vue de l'exécution du procédé selon la revendication 1, constitué d'un banc d'enroulement à chaud (1) comportant un noyau d'enroulement (2) et un galet de guidage (3), respectivement un guide (7) de fil ou de barreau à commande CNC, caractérisé en ce que le noyau d'enroulement (2) est cintré selon le cintrage désiré pour le ressort hélicoïdal (6).

3. Dispositif selon la revendication 2, caractérisé en ce que le galet de guidage (3) est de même cintré de manière correspondante.
